# EUROPÄISCHE PATENTSCHRIFT

(11) **EP 1 328 168 B1**
(45) Veröffentlichungstag und Bekanntmachung des Hinweises auf die Patenterteilung: **19.10.2005**
(21) Anmeldenummer: 01931429.3
(22) Anmeldetag: 11.04.2001
(51) Int. Cl.: A23N 7/04

(54) **VORRICHTUNG UND VERFAHREN ZUM SCHÄLEN VON SCHÄLGUT**
DEVICE AND METHOD FOR PEELING RAW PRODUCE
DISPOSITIF ET PROCEDE POUR EPLUCHER UN PRODUIT

(30) Priorität: 29.09.2000 DE 10048773
(43) Veröffentlichungstag der Anmeldung: 23.07.2003
(73) Patentinhaber: Hepro GmbH, 33129 Delbrück (DE)
(72) Erfinder: PROTTE, Christoph, 33129 Delbrück (DE)
(74) Vertreter: Ostermann, Thomas
(86) Internationale Anmeldenummer: PCT/DE2001/001420
(87) Internationale Veröffentlichungsnummer: WO 2002/026062

(56) Entgegenhaltungen:
- ES-A- 2 118 023
- GB-A- 2 035 061
- US-A- 4 679 499

## Beschreibung

Die Erfindung betrifft eine Vorrichtung zum Schälen von Schälgut, insbesondere von Spargel, mit einer Aufnahmeeinrichtung zur Halterung des Schälguts in einer aufrechten Position, wobei das Schälgut zumindest an einem freien Ende desselben an einem Halteelement der Aufnahmeeinrichtung gehaltert ist, mit einer Schneideinrichtung zum Schälen des Schälguts in einer Längsrichtung desselben, mit einer Transporteinrichtung zum Bewegen der Aufnahmeeinrichtung und/oder der Schneideinrichtung, wie aus dem Dokument US 4 679 499 bekannt.

Ferner betrifft die Erfindung ein Verfahren zum Schälen von Schälgut, wobei das Schälgut in einer vorgegebenen Richtung zwischen zwei Schälstationen bewegt wird, wobei das Schälgut in den Schälstationen durch eine Hubbewegung einer Schneideinrichtung in Längsrichtung geschält wird.

Aus der DE 44 12 561 C1 ist eine Vorrichtung zum Schälen von Schälgut bekannt, bei der das in Transportrichtung orientierte Schälgut kontinuierlich bewegt wird. Nachteilig hieran ist, dass der Schälbeginn nicht genau definierbar ist.

Aus der DE 92 03 558 U1 ist eine Vorrichtung zum Schälen von Schälgut bekannt, die eine Aufnahmeeinrichtung zur Halterung des Schälgutes aufweist. Zu diesem Zweck weist die Aufnahmeeinrichtung ein Halteelement auf, an dem das Schälgut endseitig in vertikaler Richtung gehaltert ist. Zum Schälen des Schälgutes ist eine Schneideinrichtung vorgesehen mit quer zur Längserstreckung des Schälgutes verlaufenden Klingen. Die Klingen sind jeweils an Messerträgern schwenkbar angeordnet, die um eine parallel zum Schälgut verlaufendes Schwenkachse schwenkbar angeordnet sind. Zum Schälen des Schälgutes ist dasselbe ortsfest in dem Halteelement angeordnet, wobei eine als Schlitten ausgebildete Transporteinrichtung die Schneideinrichtung in Längserstreckung des Schälgutes bewegt. Nachdem die Schneideinrichtung zu dem freien Ende des Schälgutes bewegt und das Schälgut freigegeben worden ist, erfolgt eine Drehung des Schälgutes um seine Längsachse. Die Drehung erfolgt um einen vorgegebenen Winkel, so dass nach Verbringen der Schneideinrichtung in eine Ausgangsstellung derselbe Schneidvorgang erneut erfolgen kann. Dieser Vorgang wiederholt sich so lange, bis das Schälgut umfangsseitig vollständig geschält worden ist.

Zwar weist die bekannte Vorrichtung eine kompakten Aufbau auf. Sie ist jedoch nicht für einen hohen Durchsatz des Schneidgutes geeignet. Nachteilig ist ferner, dass der Messerträger der Schneideinrichtung scherenhaft hin- und herbewegt werden.

Aufgabe der vorliegenden Erfindung ist es daher, eine Vorrichtung zum Schälen von Schälgut derart weiterzubilden, dass bei einem hohen Schäldurchsatz mit geringem Aufwand eine verbesserte Schälqualität des Schälgutes erzielt werden kann.

Zur Lösung dieser Aufgabe ist die erfindungsgemäße Vorrichtung in Verbindung mit dem Oberbegriff des Patentanspruchs 1 dadurch gekennzeichnet, dass die Aufnahmeeinrichtung eine Mehrzahl von in einer Reihe angeordneten Halteelementen aufweist, die mittels der Transporteinrichtung senkrecht zur Längserstreckung des Schälgutes (31) umlaufend bewegbar sind.

Der besondere Vorteil der erfindungsgemäßen Vorrichtung besteht darin, dass das Schälgut durch den umlaufenden Transport mehrerer Halteelemente gleichzeitig jeweils einer unterschiedlichen Schälstation zugeführt wird. Nach Durchlauf eines Schälgutes entlang einer Schneidbahn, die im wesentlichen senkrecht zu der Längserstreckung des in dem Halteelement gelagerten Schälgutes verläuft, ist der Schälvorgang endgültig beendet. Dadurch, dass in der Schälstation jedem Paar von Schwenkarmen der Schneideinrichtung ein Schälgut zugeordnet ist, so dass ein gleichzeitiges Schneiden erfolgen kann, wird ein relativ hoher Schäldurchsatz erzielt.

Das Schälgut ist lediglich einer Kraftbeanspruchung in einer Richtung ausgesetzt. Hierdurch kann das Schälergebnis wesentlich verbessert werden, da eine eindeutige Relativlage, und zwar in senkrechter Richtung, zwischen der Transportrichtung des Schälgutes einerseits und der Bewegungsrichtung der Schneideinrichtung andererseits gegeben ist. Ferner wird ein industrieller Einsatz der Vorrichtung ermöglicht, wobei das Schälergebnis einer erwünschten Handschälung sehr nahe kommt.

Nach einer besonderen Ausführungsform der Erfindung sind die Mehrzahl von Halteelementen zwischen den Schälstationen entlang einer Ebene geführt, so dass stets eine senkrechte Lage des Schälgutes zu der Transportrichtung gewährleistet ist.

Nach einer Weiterbildung der Erfindung erfolgt die Bewegung der Mehrzahl von Halteelementen entlang einer geradlinigen Transportbahn, so dass die Transporteinrichtung platzsparend in einer Ebene angeordnet ist. Der Abstand der Halteelemente zueinander wird bestimmt durch den vorgegebenen Abstand der den jeweiligen Schälstationen Schneidelemente (Schwenkarme, Klingen) der Schneideinrichtung zueinander. Dadurch, dass die den Schälstationen zugeordneten Paare von Schwenkarmen ebenfalls reihenförmig bzw. geradlinig und in einer zu den Halteelementen gemeinsamen Ebene angeordnet sind, kann eine platzsparende Anordnung der Vorrichtung erzielt werden. Der Verlauf der Paare von Verschwenkarmen folgt in einem Abstand zu dem Verlauf der reihenförmig angeordneten Halteelemente.

Nach einer besonderen Ausführungsform der Erfindung sind jeweils einem Schälgut zugeordnete Halteelemente der Aufnahmeeinrichtung entlang eines Endlosmittels angeordnet, das über zwei in einem Abstand zueinander angeordnete Rollen geführt ist und von zumindest einer Antriebsrolle angetrieben wird. Vorteilhaft kann auf diese Weise eine einfache Vorschubbewegung der Halteelemente in Transportrichtung bewirkt werden.

Nach einer Weiterbildung der Erfindung weist die Transporteinrichtung Kopplungsmittel auf, derart, dass zum einen die Halteelemente entlang der geradlinigen Transportrichtung und zum anderen die Schneideinrichtung entlang einer senkrecht zur Transportrichtung orientierten Hubbewegung bewegt wird. Die Kopplungsmittel sind als Getriebe ausgebildet, über die die Aufnahmeeinrichtung einerseits und die Schneideinrichtung andererseits jeweils mit einer gemeinsamen Antriebseinrichtung verbunden sind. Vorteilhaft können somit definierten Bewegungsrichtungen erzeugt werden.

Nach einer Weiterbildung der Erfindung ist der Aufnahmeeinrichtung eine Stelleinheit zugeordnet, mittels derer ein Freilauf einer mit der Antriebsrolle des Endlosmittels verbundener Vorschubwelle ermöglicht wird. Auf diese Weise wird ein taktweise in einem vorgegebenen Zeitintervall auftretendes Stoppen der Aufnahmeeinrichtung ermöglicht, innerhalb dessen der Schälvorgang innerhalb einer Schälstation erfolgen kann. Dabei ist die Vorschubwelle über eine Schubstange mit einer Antriebswelle der Antriebseinrichtung gekoppelt.

Nach einer Weiterbildung der Erfindung ist ein Messerhalter in Seitenansicht L-förmig ausgebildet, wobei sich an einer Seite von in einer Ebene erstreckenden Schwenkarmen jeweils ein quer abragender Messerträger anschließt. Dieser Messerträger weist eine drehbewegliche Klinge auf. Dadurch, dass der Messerträger in einem relativ großen Abstand zu der Schwenkachse und parallel zu derselben verläuft, erfolgt die Öffnungs- und Schließbewegung des Messerträgers im Wesentlichen geradlinig und dadurch parallel. Vorteilhaft kann hierdurch ein symmetrisches Schälen des Schälgutes verwirklicht werden.

Nach einer Weiterbildung der Erfindung ist das Halteelement der Aufnahmeeinrichtung als eine mit einer Öffnung versehene Haltetulpe ausgebildet, innerhalb derer umfangsseitig eine Innenmembran angeordnet ist, die durch Ansteuerung einer Luftdruckquelle nach innen zusammendrückbar ist. Auf diese Weise kann auf einfache Weise ein sicheres Erfassen und Halten des Schälgutes erzielt werden.

Nach einer Weiterbildung der Erfindung ist die Haltetulpe mit einem Rückschlagventil versehen, so dass die Haltetulpe lediglich beim Einsetzen des Schälgutes in die Öffnung mit Druck beaufschlagt werden muss. Nach Durchlauf mehrerer Schälstationen am Ende des Schälvorganges kann durch Entriegeln des Rückschlagventils das Entfernen des Schälgutes aus der Haltetulpe bewirkt werden. Vorteilhaft kann durch diese erfindungsgemäße Lösung das Vorsehen von mehreren Zuführschläuchen entlang der Transportrichtung vermieden werden.

Weiterhin ist Aufgabe der Erfindung ein Verfahren zum Schälen von Schälgut anzugeben, das ein hochwertiges Schälergebnis bei hohem Durchsatz des Schälgutes erzielt wird.

Zur Lösung dieser Aufgabe ist das erfindungsgemäße Verfahren dadurch gekennzeichnet, dass das jeweils in einem Halteelement der Aufnahmeeinrichtung angeordnete Schälgut entlang einer geradlinigen Transportbahn taktweise und senkrecht zur Längserstreckung des Schälguts zwischen benachbarten Schälstationen bewegt wird, und dass die Halteelemente in der Schälstation solange ortsfest angeordnet werden, bis das Schälgut mittels senkrecht zur Transportbahn geführter Messerhalter der Schneideinrichtung geschält worden sind.

Der besondere Vorteil des erfindungsgemäßen Verfahrens besteht darin, dass sowohl zum Transportieren des Schälgutes als auch zum Schneiden desselben lineare bzw. geradlinige Bewegungsbahnen durchlaufen werden. Die Schneideinrichtung und die Aufnahmeeinrichtung befinden sich in einer definierten Relativlage zueinander, so dass das Schälergebnis dauerhaft auf einem hohen Niveau gehalten werden kann.

Ein Ausführungsbeispiel der Erfindung wird nachfolgend anhand der Zeichnungen näher erläutert.

Es zeigen:
- Figur 1: eine Seitenansicht einer Vorrichtung zum Schälen von Schälgut,
- Figur 2: eine Vorderansicht der Vorrichtung,
- Figur 3: einen Querschnitt durch ein Halteelement einer Aufnahmeeinrichtung der Vorrichtung in einer Öffnungs- und in einer Schließstellung,
- Figur 4: eine schematische Draufsicht auf eine Schneideinrichtung mit unterschiedlich orientierten Messerhaltern für zwei Schällinien,
- Figur 5: eine vergrößerte Darstellung einer Vorschubwelle mit einem Freilauf und einer Stelleinheit,
- Figur 6a: eine vergrößerte Darstellung der Ansteuerung einer Antriebsrolle zur Bewegung der Aufnahmeeinrichtung in der Transportrichtung in einer ersten Endstellung,
- Figur 6b: eine vergrößerte Darstellung der Ansteuerung einer Antriebsrolle zur Bewegung der Aufnahmeeinrichtung in der Transportrichtung in einer zweiten Endstellung,
- Figur 7: eine Seitenansicht eines Messerhalters,
- Figur 8: eine Vorderansicht des Messerhalters in einer Schließstellung,
- Figur 9: eine Vorderansicht des Messerhalters in einer Öffnungsstellung,
- Figur 10: eine Vorderansicht der Vorrichtung mit einer Zuführeinrichtung und
- Figur 11: eine Stirnansicht der Zuführeinrichtung in einem Aufnahmebereich des Schälguts.

Die erfindungsgemäße Vorrichtung zum Schälen von Schälgut dient im Wesentlichen zum Schälen von Spargelstangen. Die Vorrichtung weist im Wesentlichen eine Aufnahmeeinrichtung 1 zur Halterung von Spargelstangen 31, eine Schneideinrichtung 2 zum Schälen der Spargelstangen 31 sowie eine Transporteinrichtung 3 zum Bewegen der Aufnahmeeinrichtung 1 bzw. der Schneideinrichtung 2 auf.

Die Transporteinrichtung 3 weist Kopplungsmittel auf, mittels derer die Aufnahmeeinrichtung 1 und die Schneideinrichtung 2 mit einer gemeinsamen Antriebseinrichtung 4 gekoppelt sind.

Die Antriebseinrichtung 4 ist oberhalb der Aufnahmeeinrichtung 1 angeordnet und weist einen elektrischen Antriebsmotor 5 auf, der mit einer Antriebswelle 6 versehen ist, an deren freien Enden die Kopplungsmittel angelenkt sind.

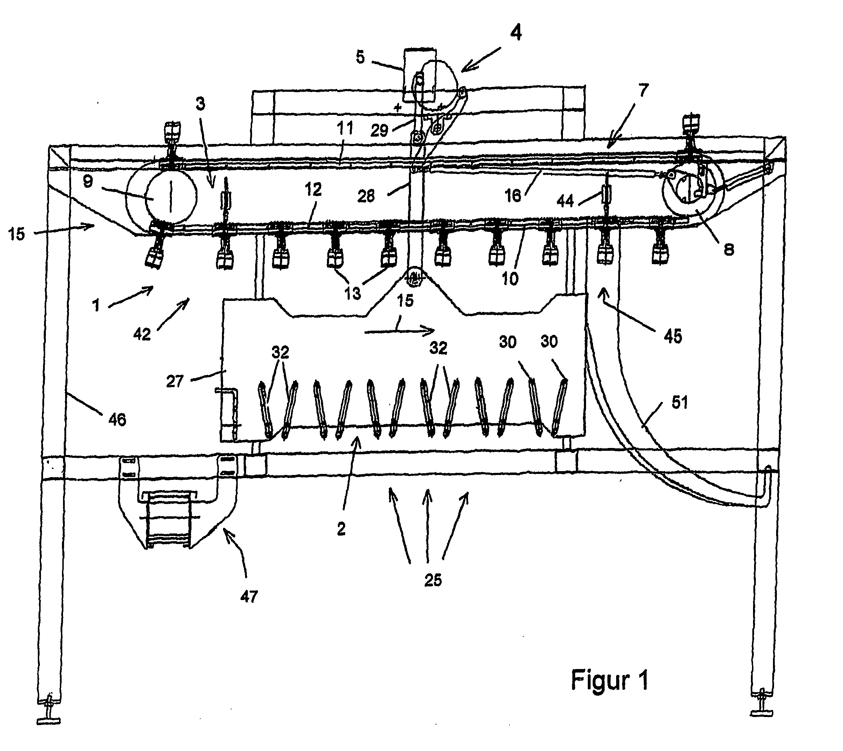

Die Kopplungsmittel bestehen zum einen aus einem Vorschubgetriebe 7, mittels dessen eine Antriebsrolle 8 der Aufnahmeeinrichtung 1 antreibbar ist. Die Antriebsrolle 8 ist eine von zwei Rollen 8 und 9, die in einem Abstand zueinander angeordnet sind und im Wesentlichen eine horizontale Ebene aufspannen. Um die beiden Rollen 8 und 9 ist ein Endlosmittel 10, das als Endlosriemen oder Endloskette ausgebildet sein kann, umgelegt. Das Endlosmittel 10 bildet ein Obertrum 11 und ein Untertrum 12, an denen auf einer nach außen zugekehrten Seite in einem regelmäßigen Abstand Halteelemente 13 abragen; aus Vereinfachungsgründen sind in Figur 1 die Halteelemente nicht vollständig dargestellt. Die Halteelemente 13 sind als Haltetulpen ausgebildet mit einer zylindrischen Öffnung 14, in die jeweils eine Spargelstange 31 einsetzbar ist.

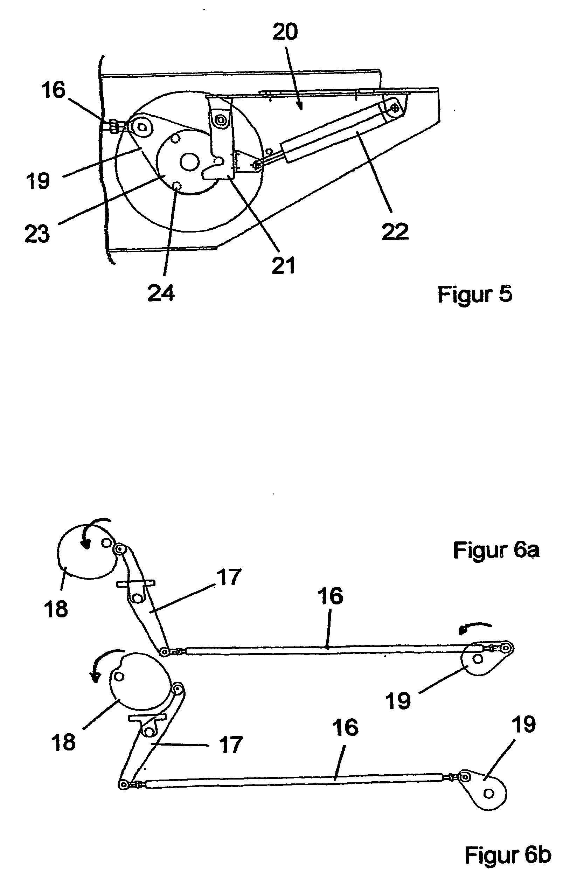

Zur Bewegung des mit in den Halteelementen 13 bestückten Untertrums 12 in eine Transportrichtung 15 weist das Vorschubgetriebe 7 eine Schubstange 16 auf, die an einer der Antriebseinrichtung 4 zugekehrten Ende mit einer Kurbelschwinge 17 gelenkig verbunden ist. Die Kurbelschwinge 17 liegt mit einem der Schubstange 16 abgewandten Ende auf einem Umfang eines Drehnockens 18 auf, der mit der Antriebswelle 6 des Antriebsmotors 5 drehfest verbunden ist. Wie deutlicher aus Figur 5 und 6 ersichtlich ist, ist die Schubstange 16 durch einen Freilauf 19 mit der Antriebsrolle 8 gekoppelt, so dass die Schubstange 16 periodisch eine Hin- und Herbewegung ausführt. Der Freilauf 19 bewirkt eine Mitnahme der Aufnahmeeinrichtung 1 in eine vorgegebene Richtung.

Zum Vorschub der Aufnahmeeinrichtung 1 in Transportrichtung 15 wird die Schubstange 16 aus einer Startposition der Vorschubbewegung gemäß Figur 6a in eine Stopposition der Vorschubbewegung gemäß Figur 6b verschoben. Ein Weiterverdrehen der Antriebsrolle 8 bei Erreichen der Stopposition gemäß Figur 6b wird durch eine Stelleinheit 20 bewirkt, die einen Festleghebels 21 aufweist, der mittels eines Druckzylinders 22 (Pneumatikzylinder) in eine das Weiterdrehen der Antriebsrolle 8 verhindernden Verriegelungsposition bringbar ist. Zu diesem Zweck ist die Antriebsrolle 8 über eine Vorschubwelle 55 mit einer Scheibe 23 mit im Umfangsbereich seitlich abragenden Raststegen 24 verbunden, die in einer entsprechenden Ausnehmung des Festleghebels 21 eingreifen.

Die Scheibe 23 mit auf dem Umfangsbereich abragenden Raststegen 24 dient der genauen Justierung der Antriebsrolle 8.

Die Antriebsrolle 8 ist mit dem Freilauf 19 durch die Vorschubwelle 55 verbunden, so dass nach Erreichen der Stopposition der Schubstange 16 eine Rückbewegung derselben ohne Weiterlauf der Antriebsrolle 8 möglich ist. Durch die Beaufschlagung des Festleghebels 21 mittels des Druckzylinders 22 wird der Festleghebel 21 in eine definierte Relativlage zu der Scheibe 23 verbracht. Auf diese Weise kann eine definierte Stopposition der Halteelemente 13 eingestellt werden, innerhalb derer der Schneidvorgang entsprechen den Schälstationen 25 erfolgen kann.

Wie aus Figur 1 ersichtlich ist, weist die Vorrichtung sechs Schälstationen 25 auf, die jeweils über ein Paar von Schneidelementen bzw. Messerhaltern 26 und einem vertikal zu demselben versetzt angeordneten Halteelement 13 verfügen. Die Messerhalter 26 sind auf einer gemeinsamen Vertikalplatte 27 angeordnet, die über eine Pleuelstange 28 und eine an dieselbe anschließende Kurbelstange 29 an der Antriebswelle 6 des Antriebsmotors 5 angelenkt ist. Die Pleuelstange 28 und die Kurbelstange 29 bilden ein Hubgetriebe, mittels dessen die Vertikalplatte 27 periodisch zwischen einem oberen und einem unteren Totpunkt hin- und herbewegt wird.

Vorteilhaft wird durch die Kopplung der Aufnahmeeinrichtung 1 und der Schneideinrichtung 2 mit derselben Antriebseinrichtung 4 ein Synchronlauf gewährleistet.

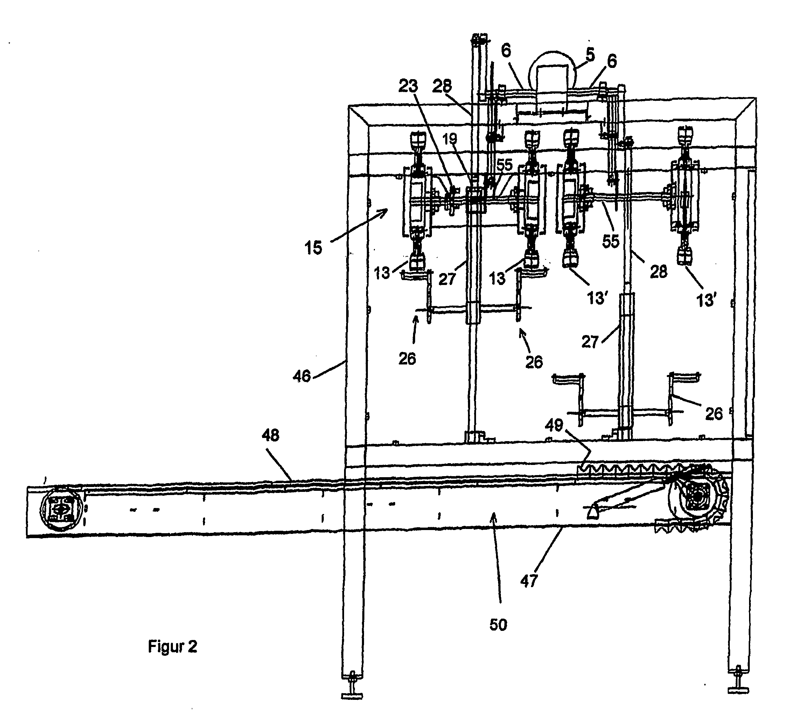

Wie aus Figur 2 deutlich wird, sind zu beiden Seiten des Antriebsmotors 5 ein Paar von Endlosmitteln 10 angeordnet, wobei sich zwischen einem Paar von Endlosmitteln 10 jeweils die Pleuelstange 28 im Wesentlichen in vertikaler Richtung erstreckt. Die gegenüberliegenden Pleuelstangen 28 werden um 180° versetzt zueinander angetrieben, so dass für den Fall, dass sich eine erste Pleuelstange 28 in einem oberen Totpunkt befindet, die andere Pleuelstange in einem unteren Totpunkt angeordnet ist. Hierdurch ist immer eine einzige Schällinie von zwei Schällinien im Schälzustand.

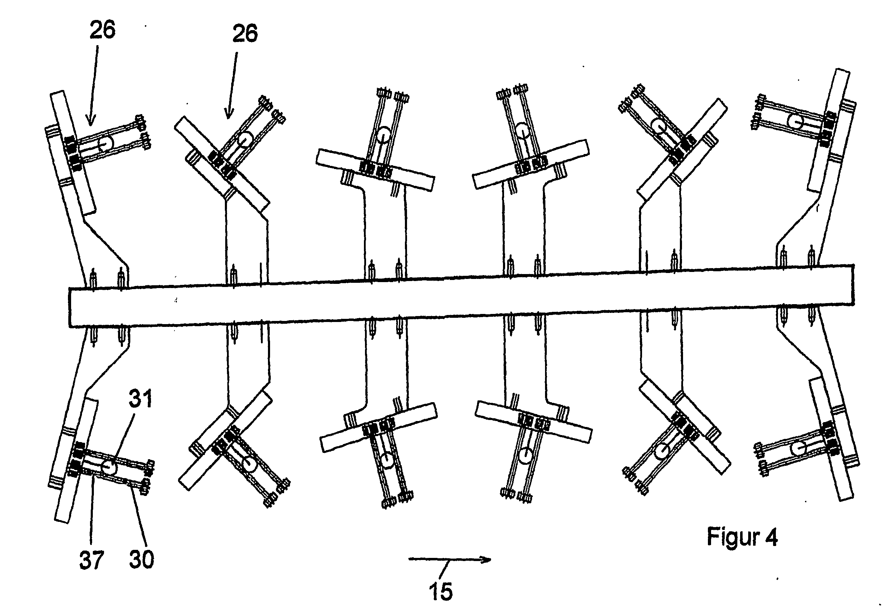

Wie insbesondere aus Figur 4 ersichtlich ist, sind die Messerhalter 26 entlang der Transportrichtung 15 um 30° versetzt zueinander angeordnet. Dadurch, dass Klingen 30 der Messerhalter 26 in der Schließposition desselben an gegenüberliegenden Seiten einer Spargelstange 31 anliegen, reichen sechs Schälstationen 25 aus, um umfangsseitig der Spargelstange 31 einen vollständigen Schälvorgang durchzuführen.

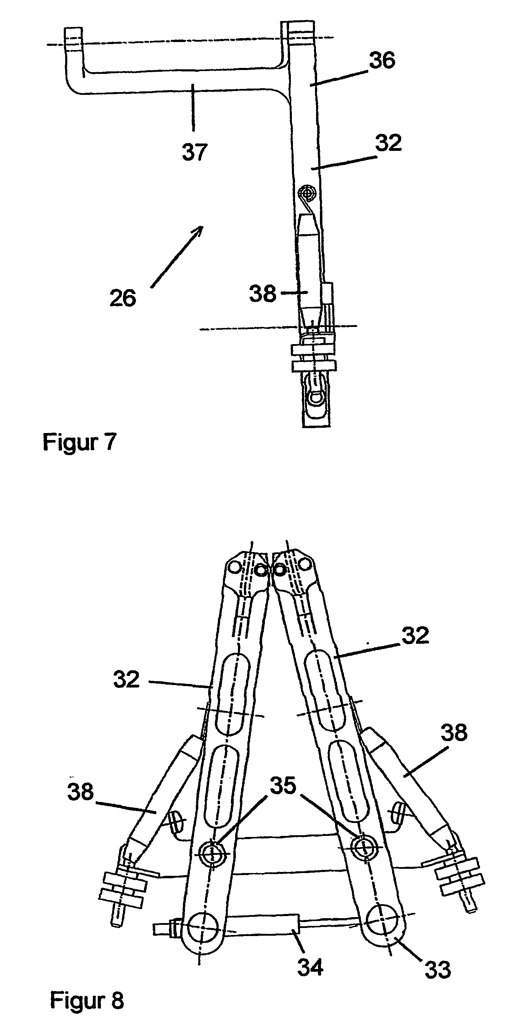

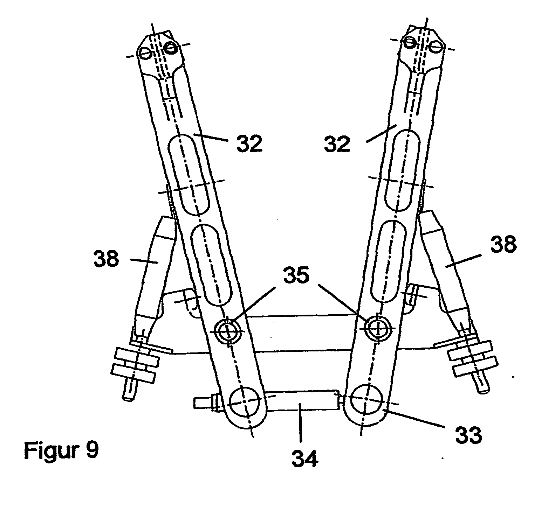

Damit die Spargelstange 31 gleichmäßig während einer Hubbewegung des Messerhalters 26 von einem oberen Totpunkt in einen unteren Totpunkt geschält wird, ist der Messerhalter 26 L-förmig ausgebildet, wobei zwei Schwenkarme 32 mittels eines zwischen untere Enden 33 derselben erstreckenden Druckzylinder 34 um jeweils eine Schwenkachse 35 verschwenkt wird. Diese Schwenkachse 35 ist in der Nähe der unteren Enden 33 angeordnet. An einem gegenüberliegenden freien Ende 36 der Schwenkarme 32 schließen sich in Querrichtung jeweils ein Messerträger 37 an, der parallel zur Schwenkachse 35 orientiert ist. Durch die Orientierung des Messerträgers 37, an dem die Klinge 30 drehbeweglich angeordnet ist, durchläuft die Klinge 30 eine annähernd geradlinige Bahn zwischen einer Schließstellung gemäß Figur 8 und einer Öffnungsstellung gemäß Figur 9. Hierdurch kann ein gleichmäßiges und homogenes Schälergebnis erzielt werden. Die Schwenkarme 32 sind jeweils über eine Feder 38 mit der Vertikalplatte 27 verbunden, so dass sie selbsttätig in die öffnenden Ausgangsstellung gemäß Figur 9 zurückbewegbar sind.

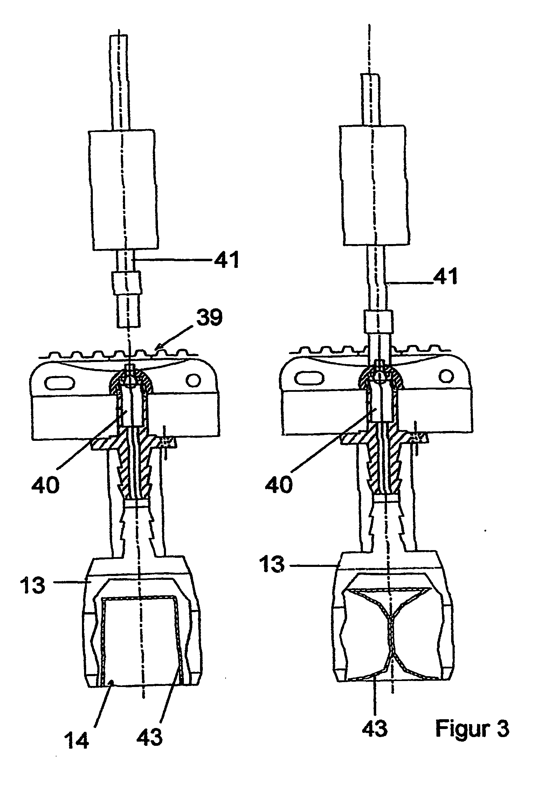

Wie aus Figur 3 deutlich wird, ist das Halteelement 13 als Haltetulpe ausgebildet, die auf einer der Öffnung 14 abgewandten Seite über einen Druckmittelanschluss 39 verfügt. Der Druckmittelanschluss 39 beinhaltet ein Rückschlagventil 40, das die Zuführung eines Druckmittels über eine Druckmittelzuführleitung 41, die mit einer zentralen Druckmittelquelle verbunden ist, in einer Startzone 42 des Schälvorganges ermöglicht. Durch die Druckmittelbeaufschlagung wird eine Innenmembran 43 der Öffnung 14 im Sinne einer Festlegung der Spargelstange 31 zusammengedrückt, so dass diese sicher gehalten wird. Nachfolgend kann durch Weiterbewegen der Haltetulpe 13 in Richtung der Transportrichtung 14 unter Lösen der Druckmittelzuführleitung 41 der erforderliche Haltedruck gehalten werden. Erst durch Beaufschlagen der Haltetulpe mittels eines Entlüftungsaggregats 44 in einer Endzone 45 des Schälvorganges, wobei das Rückschlagventil 40 entriegelt wird, kann die Druckluft entweichen und somit die Innenmembran 43 in die die Spargelstange 31 freigebende Ausgangsstellung zurückbewegt werden.

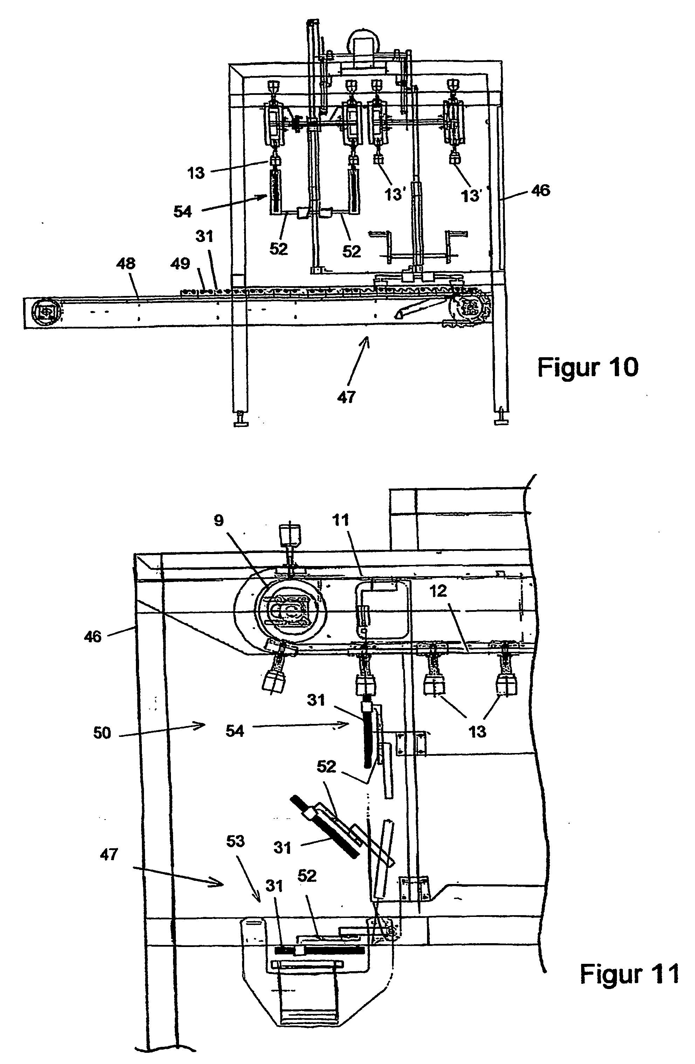

Wie aus Figur 2 ersichtlich ist, ist die Transporteinrichtung 3 und die Aufnahmeeinrichtung 1 an einem Gestell 46 gehaltert, zu dem an einem stirnseitigen Ende desselben eine Zuführeinrichtung 47 zum Zuführen der Spargelstangen 31 angeordnet ist. Die Zuführeinrichtung 47 ist quer zur Erstreckung der Aufnahmeeinrichtung 1 bzw. der Transportrichtung 15 angeordnet und weist ein Förderband 48 mit V-förmigen Vertiefungen 49 auf, in denen die Spargelstangen 31 angeordnet sind. Die Spargelstangen 31 werden an einem dem Aufnahmebereich 50 abgewandten Ende der Zuführeinrichtung 47 in die sich parallel zu der Transportrichtung 15 erstreckenden Vertiefungen 49 abgelegt. Durch Antreiben des Förderbandes 48 werden die Spargelstangen 31 in Richtung des Aufnahmebereiches 50 gefördert und dort bereitgestellt für Aufnahme mittels eines in Figur 10 und 11 dargestellten Schwenkelementes 52, das während eines Schwenktaktes in einer ersten Schwenkposition 53 die jeweiligen Spargelstangen 31 erfasst, dann verschwenkt und in einer zweiten Schwenkposition 54 an das Halteelement 13 übergibt.

Das Förderband 48 wird taktweise angesteuert, wobei während der Schwenkbewegung des Schwenkelementes 52 eine Bewegung des Förderbandes 48 erfolgt und zur Erzielung einer Entnahmeposition der Spargelstangen 31 in der ersten Schwenkposition 53 des Schwenkelementes 52 in einer Ruhestellung ist. Damit gleichzeitig zwei Paare von jeweils mit zwei Endlosmitteln 10 und zugehörigen Halteelementen 13 versehenen Aufnahmeeinrichtungen 1 bestückt werden können, ist der Fördertakt des Förderbandes 48 derart gewählt, dass zumindest nach Ablauf eines Schwenktaktes des Schwenkelementes 52 die Spargelstangen 31 um 4 Förderschritte weiterbewegt wird. Ein Förderschritt entspricht dem Abstand der Längsmittelebenen zweier benachbarter Vertiefungen 49. Auf diese Weise werden die Spargelstangen 31 zuerst von dem in Laufrichtung des Förderbandes 48 hinten liegenden Schwenkelementen 52 zu dem ersten Paar von Halteelementen 13 verschwenkt und zeitverzögert um die halbe Periode des Hubes der Schneideinrichtung 2 weitere in Förderrichtung vorne liegende Spargelstangen 31 von den weiteren Schwenkelementen 52 in Richtung des zweiten Paares von Halteelementen 13' verschwenkt.

Wie aus Figur 2 ersichtlich ist, bewegen sich die Messerhalter 26 der Schneideinrichtung 2 zwischen einem oberen Totpunkt und einem unteren Totpunkt, wobei der untere Totpunkt unterhalb des freien Endes der in dem Halteelement 13 eingespannten Spargelstange 31 befindet. Die Messerhalter 26 legen sich dabei unabhängig von der Länge der Spargelstangen 31 gemäß einer sinusförmigen Geschwindigkeitskurve, wobei die Messerträger 37 in dem oberen Totpunkt unter Anlage derselben an eine Mantelfläche der Spargelstange 31 zusammengedrückt werden. Nachfolgend kann durch Abwärtsbewegen der Messerhalter 26 ein Schälvorgang erfolgen, wobei zueinander parallele Schnittflächen gebildet werden. Spätestens mit Erreichen des unteren Totpunktes kann bereits der Vorschub des Endlosmittels 10 bewirkt werden, so dass nach Erreichen der Messerhalter 26 in dem nachfolgenden oberen Totpunkt der Schälvorgang erneut erfolgen kann. Dieser Schälvorgang wird fünfmal durch jeweils um 30° um eine vertikale Achse angeordnete Messerhalter 26 wiederholt, so dass in der Endzone 45 die fertiggeschälten Spargelstangen 31 nach Entriegeln des Halteelementes 13 über eine Führungsbahn 51 in ein nicht dargestelltes Sammelbecken geleitet werden können.

In einer alternativen Ausführungsform kann der Vorschub auch als Servomotor ausgebildet sein, der in Abhängigkeit von den vorgegebenen Ruhepositionen der Halteelemente 13 zum Schneiden der Spargelstangen 31 angesteuert wird.

Alternativ kann die Transporteinrichtung 3, d.h. die Spargelstangen 31, auch entlang einer Bogenbewegung oder Kreisumfangsbewegung geführt sein, wobei der Radius der Kreisbahn relativ groß ist. Hierdurch kann das gleiche, den industriellen Einsatz bewirkende Ziel erreicht werden, wobei statt des Endlosmittels eine Drehscheibe vorgesehen ist, an deren Umfangsbereich die Halteelemente 13 abragen. Die Drehscheibe wird umlaufend und taktweise entsprechend der Aufnahmeeinrichtung 1 angetrieben. Vorzugsweise erstreckt sich die Drehscheibe in einer horizontalen Ebene. Die Transportrichtung ist in diesem Fall nicht geradlinig, sondern bogenförmig.

## Patentansprüche

1. Vorrichtung zum Schälen von Schälgut, insbesondere von Spargel,
- mit einer Aufnahmeeinrichtung zur Halterung des Schälguts in einer aufrechten Position, wobei das Schälgut zumindest an einem freien Ende desselben an einem Halteelement der Aufnahmeeinrichtung gehaltert ist,
- mit einer Schneideinrichtung zum Schälen des Schälguts in einer Längsrichtung desselben,
- mit einer Transporteinrichtung zum Bewegen der Aufnahmeeinrichtung und/oder der Schneideinrichtung, wobei die Aufnahmeeinrichtung (1) eine Mehrzahl von in einer Reihe angeordneten Halteelementen (13, 13') aufweist, **dadurch gekennzeichnet, dass** die Halteelemente (13, 13') mittels der Transporteinrichtung (3) senkrecht zur Längserstreckung des Schälgutes (31) entlang von Schälstationen (25) geradlinig bewegbar sind.

2. Vorrichtung nach Anspruch 1, **dadurch gekennzeichnet, dass** die Halteelemente (13, 13') fest an einem Führungsmittel der Aufnahmeeinrichtung (1) angeordnet sind und dass die Messerhalter (26) nach einem vorgegebenen Winkel versetzt um eine senkrecht zur Transportrichtung (15) angeordneten Achse angeordnet sind.

3. Vorrichtung nach Anspruch 1, **dadurch gekennzeichnet, dass** zum einen die Halteelemente (13, 13') an einem Führungsmittel der Aufnahmeeinrichtung (1) drehbar um eine senkrecht zur Transportrichtung (15) orientierten Achse angeordnet sind und dass zum anderen die Messerhalter (26) der Schälstationen (25) in gleicher Richtung orientiert angeordnet sind oder dass die Messerhalter (26) nach einem vorgegebenen Winkel versetzt um eine senkrecht zur Transportrichtung (15) angeordneten Achse angeordnet sind.

4. Vorrichtung nach Anspruch 1, **dadurch gekennzeichnet, dass** die Mehrzahl von Halteelementen (13, 13') entlang einer geradlinigen und/oder bogenförmigen Transportbahn zumindest im Bereich der Schälstationen (25) bewegbar ist.

5. Vorrichtung nach einem der Ansprüche 1 bis 4, **dadurch gekennzeichnet, dass** das Führungsmittel als ein sich im wesentlichen in Transportrichtung (15) erstreckendes Endlosmittel (10) ausgebildet ist, das mittels der Transporteinrichtung (3) zur Vorschubbewegung der Halteelemente (13, 13') um mindestens zwei in einem Abstand voneinander angeordnet Rollen (8, 9) umgelegt ist.

6. Vorrichtung nach einem der Ansprüche 1 bis 5, **dadurch gekennzeichnet, dass** die Halteelemente (13, 13') in einem zu dem Abstand der Messerhalter (26) untereinander korrespondierenden Abstand zueinander angeordnet sind und dass sich die Halteelemente (13, 13') mit den Messerhaltern (26) in einer gemeinsamen, senkrecht zur Transportrichtung (15) angeordneten Ebene erstrecken.

7. Vorrichtung nach einem der Ansprüche 1 bis 6, **dadurch gekennzeichnet, dass** die Transporteinrichtung (3) Kopplungsmittel aufweist, derart, dass die Schneideinrichtung (2) senkrecht zu der Transportrichtung (15) und relativ zum Schälgut (31) eine Hubbewegung ausführt.

8. Vorrichtung nach einem der Ansprüche 1 bis 6, **dadurch gekennzeichnet, dass** die Aufnahmeeinrichtung (1) eine Mehrzahl von in einem Abstand zueinander angeordneten Halteelementen (13, 13') aufweist, die senkrecht von dem Endlosmittel (10) nach außen abragen.

9. Vorrichtung nach einem der Ansprüche 1 bis 8, **dadurch gekennzeichnet, dass** die Halteelemente (13, 13') verteilt von einem Obertrum (11) und einem Untertrum (12) des Endlosmittels (10) abragen.

10. Vorrichtung nach einem der Ansprüche 1 bis 9, **dadurch gekennzeichnet, dass** die Transporteinrichtung (3) eine Antriebseinrichtung (4) aufweist, die zum einen über eine Vorschubgetriebe (7) mit einer Antriebsrolle (8) des Endlosmittels (10) und zum anderen über ein Hubgetriebe mit der Schneideinrichtung (2) gekoppelt ist.

11. Vorrichtung nach einem der Ansprüche 1 bis 10, **dadurch gekennzeichnet, dass** das Vorschubgetriebe (7) und das Hubgetriebe (28, 29) als Kurbelgetriebe ausgebildet sind.

12. Vorrichtung nach einem der Ansprüche 1 bis 11, **dadurch gekennzeichnet, dass** das Hubgetriebe eine mit der Schneideinrichtung (2) verbundene Pleuelstange (28) aufweist, die an einer mit der Antriebswelle (6) der Antriebseinrichtung (4) verbundenen Kurbelstange (29) angelenkt ist.

13. Vorrichtung nach einem der Ansprüche 1 bis 12, **dadurch gekennzeichnet, dass** das Vorschubgetriebe (7) eine Schubstange (16) aufweist, die eine mit der Antriebsrolle (8) drehfest verbundene Vorschubwelle (55) über einen Freilauf (19) antreibt.

14. Vorrichtung nach einem der Ansprüche 1 bis 13, **dadurch gekennzeichnet, dass** die Vorschubwelle (55) mit einer Stelleinheit (20) gekoppelt ist, derart, dass nachdem mittels der Schubstange (16) und dem Freilauf (19) erfolgten Vorschub ein Druckzylinder (22) die Vorschubwelle (55) in eine vorgegebene Ruheposition zum Justieren der Halteelemente (13, 13') bewegt.

15. Vorrichtung nach einem der Ansprüche 1 bis 14, **dadurch gekennzeichnet, dass** die Vorschubwelle (55) mit einem Servomotor gekoppelt ist.

16. Vorrichtung nach einem der Ansprüche 1 bis 15, **dadurch gekennzeichnet, dass** das Endlosmittel (10) als Endlosriemen oder Endloskette ausgebildet ist.

17. Vorrichtung nach einem der Ansprüche 1 bis 16, **dadurch gekennzeichnet, dass** sich das Vorschubgetriebe (7) und das Hubgetriebe paarweise jeweils an beiden freien Enden der Antriebswelle (6) der Antriebseinrichtung (4) anschließen.

18. Vorrichtung nach einem der Ansprüche 1 bis 17, **dadurch gekennzeichnet, dass** an den freien Enden der Vorschubwelle (55) jeweils die Antriebsrolle (8) angeordnet ist.

19. Vorrichtung nach einem der Ansprüche 1 bis 18, **dadurch gekennzeichnet, dass** die Antriebseinrichtung (4) mittig und in einer zu dem Obertrum (11) und Untertrum (12) vertikal versetzten Ebene angeordnet ist.

20. Vorrichtung nach einem der Ansprüche 1 bis 19, **dadurch gekennzeichnet, dass** auf einer zu der Antriebseinrichtung (4) gegenüberliegenden Seite des Obertrums (11) und Untertrums (12) die Schneideinrichtung (2) angeordnet ist.

21. Vorrichtung nach einem der Ansprüche 1 bis 20, **dadurch gekennzeichnet, dass** die Schneideinrichtung (2) eine jeweils an dem Endlosmittel zugeordnete Vertikalplatte (27) aufweist, auf der Schwenkarme (32) eines Messerhalters (26) angeordnet sind.

22. Vorrichtung nach einem der Ansprüche 1 bis 21, **dadurch gekennzeichnet, dass** der Messerhalter (26) durch ein Paar von jeweils um eine senkrecht zur Erstreckung des Schälguts (31) verlaufende Schwenkachse (35) verschwenkbare Schwenkarme (32) gebildet ist, an die sich jeweils ein Messerträger (37) in Richtung der Schwenkachse (35) anschließen.

23. Vorrichtung nach einem der Ansprüche 1 bis 22, **dadurch gekennzeichnet, dass** der Messerhalter (26) in Seitenansicht L-förmig ausgebildet ist.

24. Vorrichtung nach einem der Ansprüche 1 bis 23, **dadurch gekennzeichnet, dass** an den Messeträger (37) parallel zu demselben eine Klinge (30) drehbeweglich angelenkt ist.

25. Vorrichtung nach einem der Ansprüche 1 bis 24, **dadurch gekennzeichnet, dass** das Halteelement als eine mit einer Öffnung (14) versehene Haltetulpe mit einer an der Innenwandung umlaufenden Innenmembran (43) ausgebildet ist, die durch Ansteuerung einer Luftdruckquelle zusammendrückbar ist zum Halten des Schälguts (31).

26. Vorrichtung nach einem der Ansprüche 1 bis 25, **dadurch gekennzeichnet, dass** die Haltetulpe (13, 13') über ein Rückschlagventil (40) mit der Luftdruckquelle beaufschlagbar ist.

27. Vorrichtung nach einem der Ansprüche 1 bis 26, **dadurch gekennzeichnet, dass** die Anzahl der sich einer Ebene der Aufnahmeeinrichtung (1) erstreckenden Halteelemente (13, 13') zu der Anzahl der paarweise angeordneten Messerträger (37) korrespondiert.

28. Vorrichtung nach einem der Ansprüche 1 bis 27, **dadurch gekennzeichnet, dass** auf einer einem Aufnahmebereich (50) zugeordneten Seite der Aufnahmeeinrichtung (1) eine Zuführeinrichtung (47) zum Zuführen des Schälguts (31) angeordnet ist mit einem antreibbaren Förderband (48) auf dem eine Mehrzahl von Schälgut (31) nebeneinanderliegend angeordnet ist, und dass jeweils einer Aufnahmeeinrichtung (1) ein Schwenkelement zugeordnet: ist, derart, dass in einem Schwenktakt das in einer Entnahmeposition befindliche Schälgut (31) in einer ersten Schwenkposition des Schwenkelementes von demselben ergriffen wird, danach in Richtung des Halteelementes (13, 13') verschwenkt und in einer zweiten Schwenkposition des Schwenkelementes an das entsprechende Halteelement (13, 13') übergeben wird.

29. Vorrichtung nach einem der Ansprüche 1 bis 28, **dadurch gekennzeichnet, dass** das Förderband (48) der Zuführeinrichtung (47) derart taktweise angesteuert wird, dass zumindest nach Zurückschwenken des Schwenkelementes das Schälgut (31) in der vorgegebenen Entnahmeposition angeordnet ist.

30. Vorrichtung nach einem der Ansprüche 1 bis 29, **dadurch gekennzeichnet, dass** zwei Paare von jeweils benachbarten Schwenkelementen in einem solchen Abstand zueinander angeordnet sind, dass zumindest nach Ablauf eines Schwenktaktes sich das Schälgut (31) um vier Förderschritte weiterbewegt hat.

31. Verfahren zum Schälen von Schälgut, wobei das Schälgut in einer vorgegebenen Richtung zwischen zwei Schälstationen bewegt wird, wobei das Schälgut in den Schälstationen durch eine Hubbewegung einer Schneideinrichtung in Längsrichtung geschält wird, **dadurch gekennzeichnet, dass** das jeweils in einem Halteelement (13, 13') der Aufnahmeeinrichtung (1) angeordnete Schälgut (31) entlang einer Transportbahn taktweise und senkrecht zur Längserstreckung des Schälguts (31) zwischen benachbarten Schälstationen (25) bewegt wird, und dass die Halteelemente (13, 13') in der Schälstation (25) solange ortsfest angeordnet sind, bis das Schälgut (31) mittels senkrecht zur Transportbahn geführter Schneidelemente (26) der Schneideinrichtung (2) geschält worden sind.

32. Verfahren nach Anspruch 31, **dadurch gekennzeichnet, dass** die der Aufnahmeeinrichtung (1) zugeordneten Messerträger (37) der Schneideinrichtung (2) synchron zwischen einem oberen Totpunkt und einem unteren Totpunkt bewegt werden.

33. Verfahren nach Anspruch 31 oder 32, **dadurch gekennzeichnet, dass** die Messerträger (37) der Schneideinrichtung (2) entsprechend einer sinusförmigen Geschwindigkeitskurve bewegt werden, wobei sie in dem oberen Totpunkt an das Schälgut (31) angelegt werden.

34. Verfahren nach einem der Ansprüche 31 bis 33, **dadurch gekennzeichnet, dass** die Messerträger (37) über das dem Halteelement (13, 13") abgewandte Ende des Schälguts (31) hinaus in Richtung des unteren Totpunktes bewegt werden.

## Claims

1. Device for peeling raw produce, especially asparagus, comprising:
a receiving means adapted to keep the raw produce in an upright position, said raw produce being retained in a holding element of said receiving means on at least one of its free ends;
a cutting unit adapted to cut said raw produce in an axial direction thereof; and
a transport device to move said receiving and/or cutting means, wherein said receiving means (1) comprises a plurality of holding elements (13, 13') arranged in one row, **characterized by** the fact that said holding elements (13, 13') are rectilinearly movable along peeling stations (25) in a plane perpendicular to the axial extension of the raw produce with the aid of said transport device (3).

2. Device according to Claim 1, **characterized by** the fact that said holding elements (13, 13') are fixedly disposed on a guide member of the receiving means (1) and that the knife holders (26) are under a predetermined angle staggered around an axis which is perpendicular to the transport direction (15).

3. Device according to Claim 1, **characterized by** the fact that on the one hand said holding elements (13, 13') are disposed on said guide member of the receiving means (1) in a manner permitting rotational movement about an axis which is perpendicular to the transport direction (15) and that on the other hand said knife holders (26) of the peeling stations (25) are either arranged in equal orientation or staggered around an axis which is perpendicular to the transport direction (15).

4. Device according to Claim 1, **characterized by** the fact that said plurality of holding elements (13, 13') are movable along a linear and/or curved transport track in the area of said peeling stations (25) at least.

5. Device according to any of the preceding Claims 1 to 4, **characterized by** the fact that said guide member is provided in the form of an endless means (10) which extends substantially in transport direction (15) and which is carried around at least two spaced-apart pulleys (8, 9) for advance movement of said holding elements (13, 13') by said transport device (3).

6. Device according to any of the preceding Claims 1 to 5, **characterized by** the fact that said holding elements (13, 13') are arranged at relative spacings which correspond to the relative spacings of the knife holders (26) and that said holding elements (13, 13') together with said knife holders (26) extend in one common plane disposed perpendicular to the transport direction (15).

7. Device according to any of the preceding Claims 1 to 6, **characterized by** the fact that the transport device (3) is provided with coupling means that make the cutting unit perform a lifting movement perpendicular to the transport direction (15) and relative to the raw produce (31).

8. Device according to any of the preceding claims 1 to 6, **characterized by** the fact that said receiving means (1) comprises a plurality of spaced-apart holding elements (13, 13') which protrude from said endless means (10) perpendicularly and outwardly.

9. Device according to any of the preceding Claims 1 to 8, **characterized by** the fact that said holding elements (13, 13') are arranged to protrude separately from an upper strand (11) and a lower strand (12) of said endless means (10).

10. Device according to any of the preceding Claims 1 to 9, **characterized by** the fact that said transport device (3) is provided with a drive system (4) which is coupled to a drive pulley (8) of said endless means (10) via a feed gear (7) on one hand and to the cutting unit (2) via a lift gear on the other hand.

11. Device according to any of the preceding Claims 1 to 10, **characterized by** the fact that the feed gear (7) and the lift gear (28, 29) are provided in the form of crank mechanisms.

12. Device according to any of the preceding Claims 1 to 11, **characterized by** the fact that the lift gear is provided with a connecting rod (28) coupled to the cutting unit (2) which is linked to a crank rod (29) in turn connected to the drive shaft of the drive system (4).

13. Device according to any of the Claims 1 to 12, **characterized by** the fact that the feed gear (7) comprises a push rod (16) adapted via a freewheel means (19) to drive a feed shaft (55) which is nonrotatably connected to the drive pulley (8).

14. Device according to any of the preceding Claims 1 to 13, **characterized by** the fact that said feed shaft (55) is coupled to an adjusting means (20) in such a way that following a feed motion provoked by the push rod (16) and the freewheel means (19) a pressure cylinder (22) moves the feed shaft (55) into a predetermined rest position for adjusting the holding elements (13, 13').

15. Device according to any of the preceding Claims 1 to 14, **characterized by** the fact that the feed shaft (55) is coupled to a servomotor.

16. Device according to any of the preceding Claims 1 to 15, **characterized by** the fact that the endless means (10) is an endless belt or an endless chain.

17. Device according to any of the preceding Claims 1 to 16, **characterized by** the fact that the feed gear (7) and the lift gear are in pairs each connected to the two free ends of the drive shaft (6) of said drive system (4).

18. Device according to any of the preceding Claims 1 to 17, **characterized by** the fact that a drive pulley (8) is disposed on each of the free ends of the feed shaft (55).

19. Device according to any of the preceding Claims 1. to 18, **characterized by** the fact that the drive system (4) is disposed centrally and in a plane which is vertically offset relative to the upper strand (11) and the lower strand (12).

20. Device according to any of the preceding Claims 1 to 19, **characterized by** the fact that the cutting unit (2) is disposed on that side of the upper strand (11) and the lower strand (12) which is opposite to the drive system (2).

21. Device according to any of the preceding Claims 1 to 20, **characterized by** the fact that the cutting unit (2) comprises a vertical plate member (27) associated with said endless means on which swivel arms (32) of a knife holder (26) are arranged.

22. Device according to any of the preceding Claims 1 to 21, **characterized by** the fact that said knife holder (26) is constituted by a pair of swivel arms (32) which are each pivotable about a swivel axis that is perpendicular to the longitudinal axis of the raw produce and each of which is disposed adjacent to a knife carrier (32) and extending towards said swivel axis (35).

23. Device according to any of the preceding Claims 1 to 22, **characterized by** the fact that said knife holder (26) is L-shaped as viewed from the side.

24. Device according to any of the preceding Claims 2 to 23, **characterized by** the fact that a cutter blade (30) is rotatably linked to the knife carrier (37) in a parallel relation therewith.

25. Device according to any of the preceding Claims 1 to 24, **characterized by** the fact that the holding element is provided in the form of a holding bell provided with an opening (14) having a peripheral inner diaphragm (43) which is compressible upon activation of a compressed air source to retain the raw produce (31).

26. Device according to any of the preceding Claims 1 to 25, **characterized by** the fact that compressed air from said source may be applied to said holding bell (13, 13') via a nonreturn valve (40).

27. Device according to any of the preceding Claims 1 to 26, **characterized by** the fact that the number of holding elements (13, 13') extending in one plane of said receiving means (1) conforms to the number of pairwise arranged knife carriers (37).

28. Device according to any of the preceding Claims 1 to 27, **characterized by** the fact that on one side of said receiving means (1) which is allocated to a receiving area (50) there is a feed system (47) arranged for feeding raw produce (31), said feed system comprising a drivable belt conveyor (48) on which a plurality of raw produce units (31) are placed side by side, and that one swivel element is allocated to each of the receiving means (1) such that in the course of a swivel cycle the raw produce (31) being in a takeoff position is seized by the swivel element in a first swivel position thereof, is then swung towards the holding element (13, 13') and in a second swivel position of said swivel element is finally transferred to its associated holding element (13, 13').

29. Device according to any of the preceding Claims 1 to 28, **characterized by** the fact that the belt conveyor (48) of the feed system (47) is cyclically activated in such a way that after backswinging at least of the swivel element the raw produce (31) has reached its predetermined takeoff position.

30. Device according to any of the preceding Claims 1 to 29, **characterized by** the fact that two pairs of adjacent swivel elements are spaced apart in such a way that at least after termination of one swivel cycle the raw produce (31) has advanced by four conveying steps.

31. Method for peeling raw produce wherein said raw produce is moved in a predetermined direction between two peeling stations and wherein raw produce in the peeling stations gets peeled due to a lifting movement of a cutting unit in longitudinal direction thereof, **characterized by** the fact that any raw produce (31) retained in one of the holding elements (13, 13') of said receiving means (1) is moved between adjacent peeling stations (25) cyclically and perpendicular to its longitudinal axis and that the holding elements (13, 13') are maintained stationary in said peeling station (25) until the raw produce (31) has been peeled with the aid of cutting elements (26) of said cutting unit (2) which are moving perpendicular to the transport track.

32. Method according to Claim 31, **characterized by** the fact that the knife carriers (37) of said cutting unit (2) associated with said receiving means (1) are moved between a top and a bottom deadcenter position in synchronism.

33. Method according to Claim 31 or 32, **characterized by** the fact that the knife carriers (37) of said cutting unit (2) are moved in conformity with a sine speed curve and caused to engage the raw produce (31) in said top deadcenter position.

34. Method according to any of the preceding Claims 31 to 33, **characterized by** the fact that the knife carriers (37) are moved beyond the very end of the raw produce (31) which is facing away from the holding element 13, 13'), i.e. towards the bottom deadcenter position.

## Revendications

1. Dispositif pour éplucher un produit à éplucher, notamment des asperges,
- avec un dispositif de réception pour maintenir le produit à éplucher dans une position verticale, ledit produit à éplucher étant tenu, au moins à l'une de ses extrémités libres, par un élément de maintien équipant le dispositif de réception,
- avec un système de coupe pour l'épluchage du produit à éplucher, dans une direction longitudinale de celui-ci,
- avec un système de transport pour mouvoir le dispositif de réception et / ou le dispositif de coupe,
le dispositif de réception (1) présentant un grand nombre d'éléments de maintien (13, 13') disposés sur une rangée,
**caractérisé en ce que**
les éléments de maintien (13, 13') du dispositif de transport (3) peuvent être déplacés, perpendiculairement au sens de la longueur du produit à éplucher (31), en ligne droite, le long de postes d'épluchage (25).

2. Dispositif selon la revendication 1, **caractérisé en ce que** les éléments de maintien (13, 13') sont disposés fixement sur un moyen de guidage du dispositif de réception (1), et que les supports de couteaux (26) sont disposés, décalés selon un angle prédéterminé, autour d'un axe perpendiculaire à la direction de transport (15).

3. Dispositif selon la revendication 1, **caractérisé en ce que**, d'une part, les éléments de maintien (13, 13') sont disposés, à rotation autour d'un axe orienté perpendiculairement à la direction de transport (15), sur un moyen de guidage du dispositif de réception (1), et que, d'autre part, les supports de couteaux (26) des postes d'épluchage (25) sont disposés, orientés dans la même direction ou que les supports de couteaux (26) sont disposés, décalés selon un angle prédéterminé, autour d'un axe perpendiculaire à la direction de transport (15).

4. Dispositif selon la revendication 1, **caractérisé en ce que** la majeure partie des éléments de maintien (13, 13') peuvent être déplacés le long d'une voie de transport en ligne droite et / ou en courbe, tout au moins dans le domaine des postes d'épluchage (25).

5. Dispositif selon l'une des revendications 1 à 4, **caractérisé en ce que** le moyen de guidage est conçu sous la forme d'un moyen sans fin (10) qui, s'étendant essentiellement dans la direction de transport (15), est renversé, par le dispositif de transport (3), pour assurer l'avance des éléments de maintien (13, 13'), sur au moins deux rouleaux (8, 9) disposés à distance l'un de l'autre.

6. Dispositif selon l'une des revendications 1 à 5, **caractérisé en ce que** les éléments de maintien (13, 13') sont disposés, les uns par rapport aux autres, à une distance qui correspond à la distance des supports de couteaux (26) les uns par rapport aux autres, et que les éléments de maintien (13, 13') et les supports de couteaux (26) sont disposés sur un plan commun qui est orienté perpendiculairement à la direction de transport (15).

7. Dispositif selon l'une des revendications 1 à 6, **caractérisé en ce que** le dispositif de transport (3) présente des organes de couplage de telle manière que le dispositif de coupe (2) exécute un mouvement vertical, perpendiculairement à la direction de transport (15) et relatif au produit à éplucher (31).

8. Dispositif selon l'une des revendications 1 à 6, **caractérisé en ce que** le dispositif de réception (1) présente plusieurs éléments de maintien (13, 13') disposés à intervalle les uns des autres, lesquels font saillie vers l'extérieur, perpendiculairement au moyen sans fin (10).

9. Dispositif selon l'une des revendications 1 à 8, **caractérisé en ce que** les éléments de maintien (13, 13'), répartis, font saillie d'une partie supérieure (11) et d'une partie inférieure (12) de l'organe sans fin (10).

10. Dispositif selon l'une des revendications 1 à 9, **caractérisé en ce que** le dispositif de transport (3) présente un dispositif d'entraînement (4) qui, d'une part, est couplé avec un rouleau d'entraînement (8) de l'organe sans fin (10), par l'intermédiaire d'un mécanisme d'avance (7), et, d'autre part, avec le dispositif de coupe (2), par l'intermédiaire d'un mécanisme de montée et descente.

11. Dispositif selon l'une des revendications 1 à 10, **caractérisé en ce que** le mécanisme d'avance (7) et le mécanisme de montée et descente (28, 29) sont conçus en tant que mécanismes à manivelles.

12. Dispositif selon l'une des revendications 1 à 11, **caractérisé en ce que** le mécanisme de montée et descente présente une bielle (28) qui, reliée au dispositif de coupe (2), est articulée sur une manivelle (29) reliée à l'arbre de commande (6) du dispositif d'entraînement (4).

13. Dispositif selon l'une des revendications 1 à 12, **caractérisé en ce que** le mécanisme d'avance (7) présente une bielle (16) qui, par l'intermédiaire d'une marche libre (19), entraîne un arbre d'avance (55) relié solidaire à rotation au rouleau d'entraînement (8).

14. Dispositif selon l'une des revendications 1 à 3, **caractérisé en ce que** l'arbre d'avance (55) est couplé avec une unité d'ajustage (20) de telle manière que, après avance effectuée au moyen de la bielle (16) et de la roue libre (19), un vérin (22) amène l'arbre d'avance (55) dans une position de repos prédéterminée pour ajuster les éléments de maintien (13. 13').

15. Dispositif selon l'une des revendications 1 à 14, **caractérisé en ce que** l'arbre d'avance (55) est couplé avec un servomoteur.

16. Dispositif selon l'une des revendications 1 à 15, **caractérisé en ce que** le moyen sans fin (10) est conçu en tant que courroie sans fin ou de chaîne sans fin.

17. Dispositif selon l'une des revendications 1 à 16 **caractérisé en ce que** le mécanisme d'avance (7) et le mécanisme de montée et descente sont respectivement raccordées, appariés, aux deux extrémités libres de l'arbre de commande (6) du dispositif d'entraînement (4).

18. Dispositif selon l'une des revendications 1 à 17, **caractérisé en ce que** chacune des extrémités libres de l'arbre d'avance (55) est équipée d'un rouleau d'entraînement (8).

19. Dispositif selon l'une des revendications 1 à 18, **caractérisé en ce que** le dispositif d'entraînement (4) est disposé centralement et sur un plan décalé perpendiculairement par rapport à la partie supérieure (11) et à la partie inférieure (12).

20. Dispositif selon l'une des revendications 1 à 19, **caractérisé en ce que** le dispositif de coupe (2) est disposé sur un côté de la partie supérieure (11) et de la partie inférieure (12) opposé au dispositif d'entraînement (4).

21. Dispositif selon l'une des revendications 1 à 20, **caractérisé en ce que** le dispositif de coupe (2) présente une plaque verticale (27) associée au moyen sans fin, sur laquelle sont disposés des bras pivotants (32) d'un support de couteaux (26).

22. Dispositif selon l'une des revendications 1 à 21, **caractérisé en ce que** le support de couteaux (26) est formé par une paire bras pivotants (32) tournant autour d'un axe de pivotement orienté perpendiculairement au sens longitudinal du produit à éplucher (31), bras à chacun desquels un porte-couteau (37) est raccordé dans la direction de l'axe de pivotement (35).

23. Dispositif selon l'une des revendications 1 à 22, **caractérisé en ce que** le support de couteaux (26), vu latéralement, présente la forme d'un L.

24. Dispositif selon l'une des revendications 1 à 23, **caractérisé en ce que**, sur le porte-couteau (37), une lame (30) est articulée, à rotation, parallèlement à celui-ci.

25. Dispositif selon l'une des revendications 1 à 24, **caractérisé en ce que** le dispositif de maintien est réalisé sous la forme d'une tulipe de maintien, pourvue d'une ouverture (14), avec une membrane intérieure (43) s'étendant en continu sur la paroi intérieure, laquelle peut être comprimée par actionnement d'une source d'air comprimé, pour maintenir le produit à éplucher (31).

26. Dispositif selon l'une des revendications 1 à 25, **caractérisé en ce que** la tulipe de maintien (13, 13') est soumise à l'influence de la source d'air comprimé par l'intermédiaire d'un clapet de retenue.

27. Dispositif selon l'une des revendications 1 à 26, **caractérisé en ce que** le nombre des éléments de maintien (13, 13') s'étendant sur un plan du dispositif de réception (1) correspond au nombre des porte-couteaux (37) disposés deux par deux.

28. Dispositif selon l'une des revendications 1 à 27, **caractérisé en ce que**, sur un côté du dispositif de réception (1), associé à une zone de réception (50), un dispositif d'alimentation (47) pour l'amenée du produit à éplucher (31) est disposé, avec une bande transporteuse (48) à commande, sur laquelle plusieurs produits à éplucher (31) sont disposés à côté les uns des autres, et **en ce qu'**un élément pivotant est respectivement associé à un dispositif de réception (1) de telle manière que le produit à éplucher (31), qui se trouve dans une position de prélèvement, est saisi, lors d'une phase de pivotement rythmé, par l'élément pivotant, dans une première position de pivotement de celui-ci, puis pivoté en direction de l'élément de maintien (13, 13'), et, dans une deuxième position de pivotement de l'élément pivotant, est remis à l'élément de maintien (13, 13') correspondant.

29. Dispositif selon l'une des revendications 1 à 28, **caractérisé en ce que** la bande transporteuse (48) du dispositif d'alimentation (47) est commandée rythmiquement de telle manière que le produit à éplucher (31) se trouve disposé dans la position de prélèvement prédéterminée, tout au moins après le pivotement rétrograde de l'élément pivotant.

30. Dispositif selon l'une des revendications 1 à 29, **caractérisé en ce que** deux paires d'éléments pivotants voisins sont disposées à une telle distance l'une de l'autre que, tout au moins après une phase de pivotement rythmé, le produit à éplucher (31) est déplacé de quatre pas de transport.

31. Procédé pour l'épluchage de produits à éplucher, ledit produit à éplucher étant mû dans une direction prédéterminée, entre deux postes d'épluchage, le produit à éplucher étant épluché, dans le sens de la longueur, dans les postes d'épluchage, par un mouvement vertical d'un dispositif de coupe, **caractérisé en ce que** chaque produit à éplucher (31), disposé dans un élément de maintien (13, 13') du dispositif de réception (1), est déplacé le long d'une voie de transport, rythmiquement et perpendiculairement au sens de la longueur du produit à éplucher (31), entre des postes d'épluchage (25) voisins, et que les éléments de maintien (13, 13') sont disposés de manière stationnaire dans le poste d'épluchage (25) jusqu'à ce le produit à éplucher (31) ait été épluché au moyen d'éléments coupants (26) du dispositif de coupe (2) qui sont guidés perpendiculairement par rapport à la voie de transport.

32. Procédé selon la revendications 31, **caractérisé en ce que** les porte-couteaux (37) du dispositif de coupe (2), associés au dispositif de réception (1), sont mus de manière synchrone entre un point mort supérieur et un point mort inférieur.

33. Procédé selon l'une des revendications 31 ou 32, **caractérisé en ce que** les porte-couteaux (37) du dispositif de coupe (2) sont déplacés selon une courbe de vitesse sinusoïdale, en étant amenés contre le produit à éplucher (31) au point mort supérieur.

34. Procédé selon l'une des revendications 31 à 33, **caractérisé en ce que** les porte-couteaux (37) sont déplacés au-delà de l'extrémité du produit à éplucher (31), opposée à l'élément de maintien (13, 13'), dans la direction du point mort inférieur.
